Europäisches Patentamt

European Patent Office

Office européen des brevets

(19)

(11) Veröffentlichungsnummer: **0 279 327**
**A2**

(12) **EUROPÄISCHE PATENTANMELDUNG**

(21) Anmeldenummer: 88101859.2

(22) Anmeldetag: 09.02.88

(51) Int. Cl.⁴: **B61H 15/00 , F16D 65/54**

(30) Priorität: 17.02.87 DE 3704925

(43) Veröffentlichungstag der Anmeldung:
24.08.88 Patentblatt 88/34

(84) Benannte Vertragsstaaten:
**BE DE ES IT NL**

(71) Anmelder: **Bergische Stahl-Industrie**
**Papenbergerstrasse 38**
**D-5630 Remscheid(DE)**

(72) Erfinder: **Rocholl, Hans**
**Damaschkestrasse, 17a**
**D-5630 Remscheid(DE)**

(74) Vertreter: **Jung, Hermann L., Dipl.-Chem.**
**Postfach 1728 Augusta-Allee 10**
**D-6380 Bad Homburg v.d.H.(DE)**

(54) **Absatzweise arbeitende Nachstellvorrichtung, insbesondere für Bremsen.**

(57) Die Erfindung betrifft eine absatzweise arbeitende Nachstellvorrichtung, insbesondere für Klotz- und Putzbremsen, wobei die Kolbenstange des hydraulischen oder pneumatischen Betätigungszylinders mind.teilweise als Rohr (15) ausgebildet ist, in das sich eine mit dem Zylindergehäuse (11) verbundene Stange (16) erstreckt, welche parallel liegende umlaufende Ringnuten (19) besitzt, und im Kolben (12) mind. ein längsverschiebliches Zwischenstück (23) liegt,in dem eine oder mehrere zweischenklige Rastfedern (2o) radial beweglich, aber parallel zur Bewegungsrichtung (K) des Kolbens (12) unverschieblich angeordnet sind und ein Anschlag (24) in Bewegungsrichtung des Kolbens (12) einstellbar und hinter den Rastfedern (2o) im Kolben (12) angeordnet ist.

Fig 1

Xerox Copy Centre

EP 0 279 327 A2

## Absatzweise arbeitende Nachstellvorrichtung, insbesondere für Bremsen

Die Erfindung betrifft eine absatzweise arbeitende Nachstellvorrichtung, insbesondere für eine Puts-und Klotzbremse mit einem Hyfraulik-oder Pneumatik-Betätigungszylinder, dessen Kolbenstange direkt, gegebenenfalls über Zwischenstücke, wie Schockabsorber, Stabilisierungsteile o.ä., mit dem Bremsklotz verbunden ist.

Die bekannten Putz-udn Klotzbremsen (DE-OS 34 25 249) sind relativ klein bauende Konstruktionsteile, bei denen ein Putzklotz unmittelbar und der Kolbenstange des Betätigungszylinders angeordnet ist, wobei in manchen Fällen noch besondere Verbindungsstücke zwischen der Kolbenstange und dem Putzklotz angeordnet sind. Bisher ist man davon ausgegangen, dass solche Geräte keine Nachstellung brauchen, weil es für die Wirkung des Putzklotzes keine Rolle spielt, ob der Bremsbelag das Rad bei verschlissenem Putzklotz nach einer etwas längeren Zeit trifft. Nun hat sich aber herausgestellt, dass die vom Putzklotz zusätzlich erzeugte Bremswirkung durchaus das Bremsverhalten des gesamten Fahrzeuge beeinflussen kann. Die bedeutet aber nichts anderes, als dass man dafür sorgen muss, dass die Bremswirkung immer nach der gleichen Zeit eintreten muss, dann nämlich wenn der Putzklotz das Rad berührt. Daraus folgt, dass eine Nachstellvorrichtung in der bekannten Vorrichtung angeordnet werden muss, die aber andererseits angesichts der Einfachheit der Putzbremse nicht zu aufwendig sein darf.

Der vorliegenden Erfindung liegt daher die Aufgabe zugrunde, eine Nachstellvorrichtung für eine Putz-und Klotzbremse vorzu sehen, welche recht einfach aufgebaut ist, welche aber trotzdem sicher funktioniert.

Die Lösung dieser besteht darin, dass die Kolbenstange des Betätigungszylinders mindestens teilweise als Rohr ausgebildet ist, in das sich eine mit dem Zylindergehäuse Verbundene Stange erstreckt, welche parallel liegende umlaufende Ringnuten besitzt, und im Kolben ein längsverschiebliches Zwischenstück liegt, in dem eine zweischeinklige Rastfeder radial beweglich, aber parallel zu Bewegungsrichtung des Kolbens unverschieblich angeordnet ist und ein Anschlag in Bewegungsrichtung des Kolbens einstellbar und hinter der Rastfeder im Kolben angeordnet ist.

Vorteilhaft ist die Breite der Ringnuten auf der Stange sowie deren Tiefe der Rastfeder entsprechend ausgestaltet.

Der Vorteil der erfindungsgemässen Vorrichtung liegt vor allem darin, dass die Nachstellung zwar absatzweise, nämlich entsprechend dem Abstand der Ringnuten funktioniert, dass aber andererseits die Funktion sehr zuverlässig und sicher erfolgt und trotzdem keinen grösseren technischen Aufwand erfordert. Darüberhinaus liegt die gesamte Nachstellung so im Innern des Zylindergehäuses, dass kein Schmutz an die Nachstellung herankommen kann, sodass ein Ausfall aus diesem Grunde nicht zu befürchten ist. Ausserdem erlaubt diese einfache Anordnung, dass das Lüftspiel zwischen Klotz und Rad den Erfordernissen entsprechend einstellbar ist.

In den Zeichnungen ist eine beispielsweise Ausführungsform der Erfindung dargestellt und zwar zeigt :

Figur 1 einen Schnitt durch einen Betätigungszylinder

Figur 2 eine Seitenansicht einer Rastfeder.

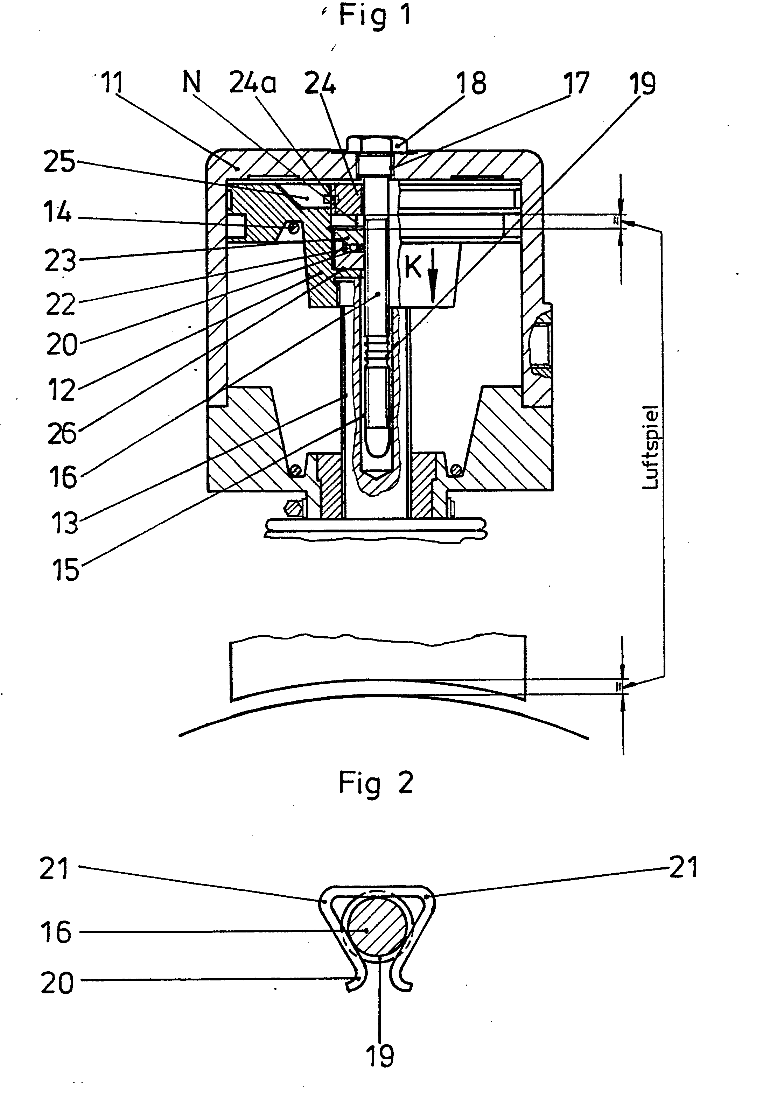

Nach den Fig. 1 und 2 besteht die Putzbremse aus einem Zylindergehäuse 11 des Betätigungszylinders, in dem der Kolben 12 gelagert ist, welcher mit seiner Kolbenstange 13 den (nicht dargestellten) Putz-oder Bremsklotz gegen das Rad drückt, wenn der Zylinder mit Hydraulikflüssigkeit oder Druckluft beaufschlagt wird. In drucklosem Zustand drückt die Rückholfeder 14 den Kolben 12 wieder in Ruhestellung wie in Fig. 1 dargestellt. Der rückwärtige Teil der Kolbenstange 13 ist in Form eines Rohres mit einer Innenbohrung 15 ausgebildet. In diese Bohrung 15 erstreckt sich eine Stange 16, welche mit dem Gewinde 17 und einem Sechskant-Kopf 18 fest im Zylindergehäuse 11 befestigt ist. Die Stange 16 besitzt über ihre ganze Länge eng aneinander und parallel liegende umlaufende Ringnuten 19, deren Breite und Tiefe der Rastfeder 2o entspricht. Diese Rastfeder 2o besitzt eine zweischenklige Form mit seitlich abstehenden Ohren 21 nach Figur 2 und liegt auf der Stange 16 unter Federspannung. Diese Spannung ist aber andererseits nicht so gross, dass die Rastfeder 2o nicht über die Ringnuten 19 hinweg verschoben werden kann. Die Rastfeder 2o liegt in einer Nut 22, welche in einem Zwischenstück 23 angeordnet ist, wobei das Zwischenstück 23 im Kolben 12 längsverschieblich liegt. Die Rastfeder 2o selbst ist in der Nut 22 radial verschieblich gelagert, kann sich aber parallel zur Bewegungsrichtung des kolbens 12 nicht verschieben. Das Zwischenstück 23 besitzt einen Abstand N zu einem Anschlag 24, welcher im Kolben 12 fest verschraubt ist, aber auf den gewünschten Abstand N eingestellt werden kann.

Bei der Benutzung eines solchen Betätigungszylinders wird in an sich bekannter Weise in den Raum 25 Druckmedium gegeben, worauf sich der Kolben 12 in Richtung des Pfeils K bewegt. Bei einer neuem Bremse wird der Weg nur kurz sein, weil sich dann der Bremsbelag an das Rad angelegt hat. Der Weg des Kolbens 12 bis zur Anlage des Bremsbelags am Rad wird im allgemeinen kleiner sein als der Abstand N des Zwischenstücks 23 vom An schlag 24, sodass das Zwischenstück 23 von der in einer Ringnut 19 liegenden Rastfeder 2o festgehalten wird. Beim weiteren Verschleiss des Bremsbelags kommt der Zeitpunkt, wo sich der Kolben 12 um einen grösseren Betrag als der Abstand N bewegen muss, damit der Bremsbelag fest am Rad anliegt. In diesem Fall wird der Anschlag 24 nach Überwindung des Abstandes N das Zwischenstück 23 mitnehmen und so verschieben, dass die Rastfeder 2o in die nächste Ringnut 19 einrastet. Wird jetzt der Zylinder 11 druckentlastet, so drückt die Rückholfeder 14 den Kolben 12 in die Ausgangsstellung zurück, was aber nur soweit möglich ist, bis der Kolben 12 an der Fläche 26 des Zwischenstücks 23 anliegt und dann zum Stillstand kommt. Bei einer erneuten Betätigung des Zylinders braucht der Kolben also nur einen kleineren Weg als dem Abstand N entspricht, bis der Bremsbelag wieder am Rad anliegt.

Sollte das Lüftspiel zwischen Rad und Bremsklotz durch extreme Achsbewegung etc. aufgezehrt sein oder sogar darüberhinaus noch Weg erfolgt sein, so würde normalerweise eine Schadstelle auftreten. Bei dem vorgenannten Zylinder ist dies nicht der Fall, denn er wird bei entsprechend grosser Kraft von aussen den Kolben rückstellen.

## Ansprüche

1) Absatzweise arbeitende Nachstellvorrichtung, insbesondere für eine Klotz-und Putzbremse mit einem Hydraulik-oder Pneumatik-Betätigungszylinder, dessen Kolbenstange direkt, gegebenenfalls über Zwischenstücke wie Schockabsorber, Stabilisierungsteile o.ä., mit dem Bremsklotz verbunden ist, dadurch gekennzeichnet, dass die Kolbenstange (13) des Betätigungszylinders mindestens teilweise als Rohr (15) ausgebildet ist, in das sich eine mit dem Zylindergehäuse (11) verbundene Stange (16) erstreckt, welche parallel liegende umlaufende Ringnuten (19) besitzt, und im Kolben (12) mindestens ein längsverschiebliches Zwischenstück (23) liegt, in dem eine oder mehrere zweischenklige Rastfedern (2o) radial beweglich, aber parallel zur Bewegungsrichtung (K) des Kolbens (12) unverschieblich angeordnet sind und ein Anschlag (24) in Bewegungsrichtung des Kolbens (12) einstellbar und hinter den Federn (2o) im Kolben (12) angeordnet ist.

2) Absatzweise arbeitende Nachstellvorrichtung nach Anspruch 1, dadurch gekennzeichnet, dass die Breite der Ringnuten (19) auf der Stange (16) sowie deren Tiefe der Rastfeder (2o) angepasst ist.

3) Absatzweise arbeitende nachstellvorrichtung nach Anspruch 1 oder 2, dadurch gekennzeichnet, dass mehrere Zwischenstücke (23) vorgesehen sind, in denen jeweils eine Rastfeder (2o) angeordnet ist.

0 279 327

## Fig 1

11 N 24a 24 18 17 19

25

14

23

22

20

12

26

16

13

15

K

Luftspiel

## Fig 2

21 21

16

20

19